# EUROPEAN PATENT SPECIFICATION

(11) **EP 1 008 786 B1**
(45) Date of publication and mention of the grant of the patent: **07.02.2007**
(21) Application number: 99124652.1
(22) Date of filing: 10.12.1999
(51) Int. Cl.: F16J 15/02, F16L 21/035

(54) **Seal and fluidtight connecting unit featuring such a seal**
Abdichtung und Dichtverbindungseinheit mit einer solchen Dichtung
Joint d'étanchéité et unité de connection étanche comportant ce joint

(30) Priority: 11.12.1998 IT TO981040
(43) Date of publication of application: 14.06.2000
(73) Proprietor: Dayco Fluid Technologies S.p.A., 10123 Torino (IT); Parker-Hannifin S.p.A., 20094 Corsico (IT)
(72) Inventor: Comi, Stefano, 20086 Motta Visconti (IT)
(74) Representative: Franzolin, Luigi

(56) References cited:
- DE-A- 4 302 251
- FR-A- 2 328 899
- US-A- 3 472 523

## Description

The present invention relates to a seal, particularly, but not exclusively, for connections between elements of a vehicle air-conditioning system, and to a connecting unit incorporating such a seal.

Connections in vehicle air-conditioning systems, to which the following description refers purely by way of example, are normally made by connecting male and female connecting members with the interposition of a pair of seals located in series to form a redundant seal and limit leakage of normally high-penetration coolant.

In one known solution, sealing is achieved using a primary and secondary O-ring housed inside respective side by side seats on the male connecting member and cooperating in fluidtight manner with an inner wall of the female connecting member. To reduce the overall axial size of the connecting unit, and in particular of the male connecting member, the secondary ring, i.e. the one downstream in the potential leakage direction, is housed in a seat adjacent to an axial end shoulder of the male connecting member, so as to cooperate with a conical inner end bevel on the female connecting member. Though axial size is reduced, the secondary ring is nevertheless deformed abnormally and, as a result of the combined effect of high working temperatures and pressures and the fabrication tolerances of the ring itself and the respective seat, is subject to permanent in-service deformation and therefore substantially ineffective.

DE-A-4 302 251 discloses a seal with side-by-side outer and inner annular projecting portions of asymmetrical shape.
US-A-3 472 523 discloses a seal with three side-by-side radially expanded portions.
FR-A-2 328 899 discloses a seal having the features of the preamble of claim 1, with two expanded oval portions having a radially elongated shape forming annular depressions that contain a lubricant, for use in concrete pipes joints.
It is an object of the present invention to provide a seal which has an optimized shape.
This object is attained by a seal as claimed in claim 1.

A preferred, non-limiting embodiment of the present invention will be described by way of example with reference to the accompanying drawings, in which:
Figure 1 shows an axial section of a seal in accordance with the present invention;
Figure 2 shows a partial axial section of a connecting unit featuring the Figure 1 seal.

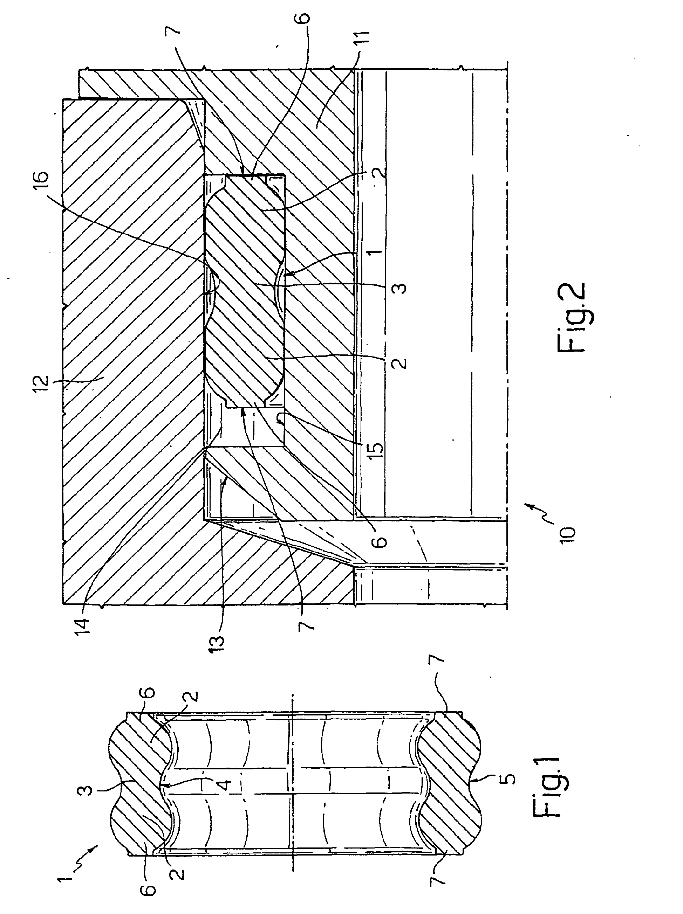

Number 1 in Figure 1 indicates a ring seal in accordance with the present invention.

Seal 1, of axis A, is made of elastomeric material, and comprises, integrally, a pair of annular, substantially toroidal, radially expanded portions 2 located side by side axially and connected integrally to each other by an intermediate portion 3 of a thickness smaller than the maximum thickness of portions 2. Portion 3 is defined radially by an inner surface 4 and an outer surface 5, having respective concave profiles and blending with respective surfaces of portions 2.

Seal 1 also comprises a pair of annular end projections 6 substantially in the form of cylindrical rings, and which extend axially from respective portions 2 and are defined axially by respective flat end surfaces 7.

Figure 2 shows an example application of seal 1 to a connecting unit 10 of a vehicle air-conditioning system.

Unit 10 comprises a male connecting member 11 (hereinafter referred to simply as "male 11") defined, for example, by an end fitting of a pipe (not shown); and a female connecting member 12 (hereinafter referred to simply as "female 12") defined by a cylindrical seat formed, for example, in the body of a system component (not shown) such as a compressor or valve, or by a female end fitting of a pipe (not shown).

Male 11 is in the form of a hollow cylinder with a lead-in end bevel 13, and has a peripheral annular seat 14 for seal 1. Seat 14 has an axially elongated rectangular section, and is of a depth slightly less than the maximum radial thickness of seal 1, so that, when assembled, portions 2 of seal 1 are compressed elastically and radially between the respective work surfaces of male 11 and female 12, defined respectively by a cylindrical bottom surface 15 of seat 14 and by a cylindrical inner surface 16 of female 12, thus ensuring sufficient contact pressure to guarantee sealing in any working condition.

The width (i.e. the axial dimension) of seat 14 is so sized as to ensure the seat is never filled entirely by seal 1, not even in the severest working conditions caused by the worst combination of fabrication tolerances (maximum seal section and minimum seat section) at maximum working temperature (e.g. 150°).

In actual use, portions 2 of seal 1 define respective sealing portions in series with each other, thus forming a redundant seal as required in air-conditioning system applications.

End projections 6 ensure seal 1 rests correctly on one side of seat 14 when subjected to working pressure (Figure 2), and prevent abnormal deformation of the seal, particularly when fitting male 11 inside female 12.

The advantages of connecting unit 10 according to the present invention, and particularly of seal 1, will be clear from the foregoing description.

In particular, the overall axial size of seal 1 and seat 14 is smaller as compared with a pair of conventional seals housed in respective seats, so that the axial size of male 11 may be reduced accordingly.

Seal 1 performs excellently by being compressed between cylindrical surfaces, and appropriate sizing of seat 14 prevents permanent deformation even in the worst operating conditions, thus ensuring perfectly effective sealing.

Comprising a single sealing member and requiring no complex machining, unit 10 is also cheap to produce and assemble.

Clearly, changes may be made to seal 1 and unit 10 as described herein without, however, departing from the scope of the accompanying Claims.

In particular, though the invention may be used to advantage on vehicle air-conditioning systems, seals and connecting units according to the invention may also be used in any other technical sector.

## Claims

1. A ring seal (1) comprising, integrally, a pair of radially expanded portions (2) located axially side by side and connected integrally by an intermediate portion (3) of a radial thickness smaller than said expanded portions,
**characterized in that** said expanded portions (2) are toroidal.

2. A seal as claimed in claim 1, **characterized in that** said intermediate portion (3) is defined radially by an inner surface (4) and an outer surface (5) having respective concave profiles and blending with respective surfaces of said expanded portions (2).

3. A seal as claimed in any one of the foregoing Claims, **characterized by** comprising a pair of annular end projections (6) extending axially from respective said expanded portions (2) and defined axially by respective flat end surfaces (7).

4. A fluidtight connecting unit (10) for a vehicle air-conditioning system, comprising a male connecting member (11) and a female connecting member (12) connectable to each other; and sealing means (1) interposed between said connecting members (11, 12); **characterized in that** said sealing means comprise a single ring seal (1) as claimed in any of the preceding claims. located axially side by side and connected integrally by an intermediate portion (3) of a radial thickness smaller than said expanded portions (2).

5. A unit as claimed in Claim 4, **characterized in that** said seal (1) is housed in a rectangular-section seat (14) formed on said male connecting member (11) and having a cylindrical bottom surface (15), and cooperates in fluidtight manner with an inner cylindrical surface (16) of said female connecting member (12).

## Patentansprüche

1. Ringdichtung (1) umfassend ein Paar von einteilig ausgebildeten, sich radial erweiternden Bereichen (2), welche in axialer Richtung nebeneinander angeordnet und einteilig über einen Zwischenbereich (3) verbunden sind, dessen radiale Erstreckung kleiner ist als die erweiterten Bereiche, **dadurch gekennzeichnet, dass** die erweiterten Bereiche (2) toroidal sind.

2. Ringdichtung nach Anspruch 1, **dadurch gekennzeichnet, dass** der Zwischenbereich (3) in radialer Richtung durch eine innere Fläche (4) und eine äußere Fläche (5) festgelegt ist, welche jeweils konkave Profilverläufe aufweisen, und die in entsprechende Flächen der erweiterten Bereiche (2) übergehen.

3. Ringdichtung nach einem der vorausgehenden Ansprüche, **dadurch gekennzeichnet, dass** das diese ein Paar von ringförmigen Vorsprüngen an den Endbereichen (6) umfasst, die jeweils in axialer Richtung von den erweiterten Bereichen (2) aus vorstehen und die axial jeweils durch ebene Endflächen (7) abgeschlossen sind.

4. Flüssigkeitsdichte Verbindungseinheit (10) für eine Klimaanlage eines Fahrzeugs, umfassend ein steckerförmiges Verbindungselement (11) und ein buchsenförmiges Verbindungselement (12), welche miteinander verbunden werden können; und Mittel zur Abdichtung (1), welche zwischen den Verbindungselementen (11, 12) angeordnet sind, **dadurch gekennzeichnet, dass** die Mittel zur Abdichtung eine einzelne Ringdichtung (1) entsprechend einem der vorausgehenden Ansprüche umfassen.

5. Verbindungseinheit nach Anspruch 4, **dadurch gekennzeichnet, dass** die Dichtung (1) in einen Dichtungssitz (14) mit rechteckiger Gestaltung aufgenommen ist, der im steckerförmigen Verbindungselement (11) ausgebildet ist und welcher eine zylindrische Bodenfläche (15) umfasst und der gegen einen Flüssigkeitsdurchtritt abdichtend mit einer inneren zylindrischen Oberfläche (16) des buchsenförmigen Verbindungselements (12) zusammenwirkt.

## Revendications

1. Un joint torique (1) comprenant, de façon intégrale, une paire de portions radialement élargies (2) qui sont axialement disposées en côte à côte et intégralement connectées par une portion intermédiaire (3), dont l'épaisseur radiale est inférieure auxdites portions élargies, **caractérisé en ce que** lesdites portions élargies (2) sont toroïdales.

2. Un joint selon la revendication 1, **caractérisé en ce que** ladite portion intermédiaire (3) est définie radialement par une surface interne (4) et une surface externe (5) possédant des profils concaves respectifs et s'adaptant ou se mariant avec des surfaces respectives desdites portions élargies (2).

3. Un joint selon l'une quelconque des revendications précédentes, **caractérisé en ce qu'**il comprend une paire de projections annulaires d'extrémité (6), qui s'étendent radialement depuis les portions respectives (2) et sont axialement définies par des surfaces plates d'extrémité respectives (7).

4. Une unité de connexion étanche (10) pour un système de climatisation de véhicule, comprenant un membre de connexion mâle (11) et un membre de connexion femelle (12) connectables l'un avec l'autre ; et des moyens formant étanchéité (1) interposés entre lesdits membres de connexion (11, 12) ; **caractérisée en ce que** lesdits moyens formant étanchéité (1) comprennent un joint torique (1) unique tel que revendiqué selon l'une quelconque des revendications précédentes.

5. Une unité selon la revendication 4, **caractérisée en ce que** ledit joint (1) est logé dans un emplacement (14) de section rectangulaire formé sur ledit membre de connexion mâle (11) et possédant une surface inférieure cylindrique (15), et coopère de façon étanche aux fluides avec une surface cylindrique interne (16) dudit membre de connexion femelle (12).
